# FASCICULE DE BREVET EUROPEEN

(11) **EP 3 143 260 B1**
(45) Date de publication et mention de la délivrance du brevet: **18.12.2019**
(21) Numéro de dépôt: 15725818.7
(22) Date de dépôt: 28.04.2015
(51) Int. Cl.: F01M 1/12, F01M 13/02, F16N 31/00, F01D 25/18, F01D 25/20, F04D 29/053, F04D 29/056, F04D 29/063, F04D 29/28, F04D 29/44

(54) **CIRCUIT DE CIRCULATION D'AIR À TRAVERS UNE ENCEINTE PALIER**
LUFTSTRÖMUNGSKREIS FÜR LUFTSTROM DURCH EIN LAGERGEHÄUSE
AIR-FLOW CIRCUIT FOR AIR FLOW THROUGH A BEARING ENCLOSURE

(30) Priorité: 15.05.2014 FR 1454327
(43) Date de publication de la demande: 22.03.2017
(73) Titulaire: Safran Transmission Systems, 92700 Colombes (FR)
(72) Inventeur: BAUDUIN, Lionel, 78800 Houilles (FR); GUILLEMONT, Maxence, 75015 Paris (FR); VIEL, Julien, 95100 Argenteuil (FR); PRUNERA-USACH, Stéphane, 92500 Rueil Malmaison (FR)
(74) Mandataire: Cabinet Camus Lebkiri
(86) Numéro de dépôt international: PCT/FR2015/051153
(87) Numéro de publication internationale: WO 2015/173488

(56) Documents cités:
- EP-A1- 1 933 077
- EP-A2- 2 592 252
- US-A- 2 983 331
- US-A1- 2011 314 830

## Description

### DOMAINE TECHNIQUE

La présente invention concerne un circuit de circulation d'air à travers une enceinte palier de turbomachine.

### ETAT DE LA TECHNIQUE ANTERIEUR

Les turbomachines de l'art antérieur comportent généralement des roulements, appelés paliers, qui sont protégés des autres composants de la turbomachine par des enceintes, appelées « enceinte paliers » qui les entourent.

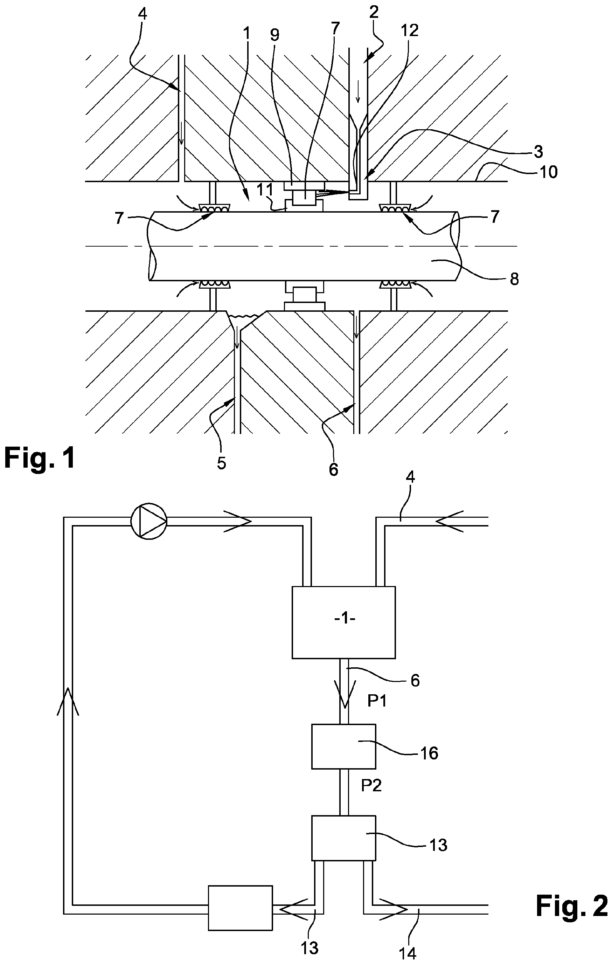

Ainsi, la figure 1 représente schématiquement une enceinte palier de l'art antérieur. Cette enceinte palier 1 permet d'isoler un palier de guidage d'un arbre tubulaire 8 des autres parties de la turbomachine. Le palier de guidage comporte une bague externe fixe 9 montée sur une partie fixe 10 de la turbomachine, une bague interne tournante 11 montée sur l'arbre tubulaire 8 et des éléments roulants 7.

Afin d'assurer la lubrification et le refroidissement du palier de guidage contenu dans l'enceinte, il est nécessaire d'injecter un lubrifiant sous pression sur les éléments en mouvement 11 et/ou 7. Pour cela, l'enceinte palier 1 comporte des moyens d'injection 12. Ces moyens d'injection 12 comportent généralement un conduit d'arrivée 2 relié à un gicleur 3 qui permettent d'envoyer le lubrifiant sous pression au niveau de la bague tournante 11 et/ou les éléments roulants 7. L'enceinte palier 1 comporte également des moyens de récupération 5 du lubrifiant qui permettent d'évacuer le lubrifiant usagé.

Par ailleurs, afin d'assurer l'étanchéité de l'enceinte palier, cette enceinte est fermée par des joints à air 7 et de l'air sous pression est injecté dans l'enceinte palier grâce à des moyens d'injection d'air 4. Cet air sous pression est généralement prélevé en aval d'un étage de compression de la turbomachine, et plus précisément en aval du compresseur basse pression de la turbomachine. Enfin, afin d'éviter que l'enceinte palier 1 ne monte en pression, l'enceinte palier comporte également des moyens d'évacuation 6 de l'air. Toutefois, l'air évacué par ces moyens d'évacuation 6 est chargé d'un brouillard de lubrifiant, de sorte qu'il est nécessaire de le purifier en filtrant le lubrifiant qu'il contient. Cette purification est généralement effectuée par un système de déshuilage. Un tel système de déshuilage est par exemple décrit dans le document FR2952402. US2011/314830 A1 décrit un autre exemple de système de déshuilage.

Or, la présence du système de déshuilage provoque une perte de charge dans le circuit de circulation d'air qui traverse l'enceinte palier, de sorte que la pression d'air dans l'enceinte palier augmente. Cette augmentation de la pression dans l'enceinte palier pénalise fortement l'étanchéité de l'enceinte palier et nécessite un prélèvement d'air à plus forte pression au niveau des étages de compresseur. Cela a pour effet d'augmenter la température de l'air prélevé et donc pose des problèmes de refroidissement des paliers. De plus, un prélèvement d'air à plus forte pression signifie que le travail de compression fourni par les compresseurs est plus important et donc le résultat est une dégradation du rendement de la turbomachine.

### EXPOSE DE L'INVENTION

L'invention vise à remédier aux inconvénients de l'état de la technique en proposant un circuit de circulation d'air à travers une enceinte palier de turbomachine qui limite le prélèvement d'air et donc diminue l'impact de la perte de charge du déshuileur sur le refroidissement des paliers et sur le rendement de la turbomachine.

Un autre objet de l'invention est de proposer un système permettant de compenser les pertes de charge créées par le système de déshuilage dans le circuit de circulation d'air à travers une enceinte palier sans pénaliser le refroidissement des paliers ni les performances de la turbomachine.

Pour ce faire, est proposé selon un premier aspect de l'invention un circuit de circulation d'air à travers une enceinte palier de turbomachine dans laquelle un lubrifiant peut être injecté, le circuit de circulation d'air comportant :
- des moyens d'amenée agencés pour amener de l'air dans l'enceinte palier,
- des moyens d'évacuation agencés pour évacuer au moins une partie du mélange air-lubrifiant contenu dans l'enceinte palier ;
- un système de déshuilage relié aux moyens d'évacuation, le système de déshuilage étant apte à séparer le lubrifiant de l'air contenu dans le mélange air-lubrifiant provenant des moyens d'évacuation;
- un compresseur disposé entre les moyens d'évacuation et le système de déshuilage, le compresseur étant apte à augmenter la pression du mélange air-lubrifiant en entrée du système de déshuilage.

Ainsi, le compresseur permet d'augmenter la pression du mélange air-lubrifiant qui le traverse de façon à au moins atténuer la perte de charge générée par le système de déshuilage. Ainsi, l'évacuation du mélange air-lubrifiant contenu dans l'enceinte palier est favorisée par le compresseur malgré la présence du système de déshuilage. Le compresseur permet donc d'entraîner le mélange air/huile de l'enceinte palier vers le système de déshuilage sans avoir à augmenter la pression du prélèvement d'air au niveau des étages de compression de la turbomachine. La présence du compresseur dans le circuit de circulation d'air permet donc au circuit d'évacuation du mélange air-lubrifiant d'être plus efficace sans que le prélèvement d'air au niveau des étages de compression de la turbomachine soit plus important et sans impacter le refroidissement des paliers et le rendement de la turbomachine.

Le circuit selon le premier aspect de l'invention peut également présenter une ou plusieurs des caractéristiques ci-après prises individuellement ou selon toutes les combinaisons techniquement possibles.

Lorsque le système de déshuilage génère une perte de charge, le compresseur est de préférence apte à compenser au moins une partie de la perte de charge générée par le système de déshuilage. Ainsi, le système de déshuilage n'impacte pas l'efficacité du circuit d'évacuation du mélange air-lubrifiant.

Selon différents modes de réalisation :
- le compresseur peut être un compresseur centrifuge, de préférence composé d'un ou plusieurs étages, ce qui est particulièrement avantageux car un tel compresseur ne comporte pas de pièce en contact et il est donc peu sensible à l'usure ;
- le compresseur peut être un compresseur volumétrique, par exemple à piston ou à palette ou à engrenages internes ou à engrenages externes.

Avantageusement, le compresseur comporte au moins un arbre rotatif, le circuit de circulation d'air comportant en outre des moyens de transmission de puissance aptes à entraîner en rotation l'arbre rotatif du compresseur.

Selon un mode de réalisation préférentiel, les moyens de transmission de puissance comportent une boite d'entraînement d'accessoires apte à transmettre le mouvement d'un arbre radial de la turbomachine à l'arbre rotatif du compresseur, la boite d'entrainement d'accessoires comportant :
- Un organe de prise de mouvement apte à engrener avec un arbre radial de la turbomachine;
- Au moins une chaîne cinématique apte à transmettre le mouvement de rotation de l'organe de prise de mouvement à l'arbre rotatif du compresseur, la chaîne cinématique comportant un arbre central relié à l'organe de prise de mouvement par un engrenage, l'arbre central étant agencé pour transmettre le mouvement de l'organe de prise de mouvement à l'arbre rotatif du compresseur.

L'arbre central comporte de préférence une extrémité distale, le compresseur étant fixé sur l'extrémité distale de l'arbre central, ce qui permet un gain de place.

L'invention concerne également une turbomachine comportant une enceinte palier pour turbomachine, ladite enceinte palier étant délimitée entre un rotor mobile en rotation autour d'un axe de référence et un stator comprenant un support de palier sur lequel est monté un palier s'appuyant sur ledit rotor, ladite enceinte comportant des moyens d'alimentation en lubrifiant dudit palier et des moyens de récupération du lubrifiant, ladite enceinte comportant de circulation d'air selon le premier aspect de l'invention.

La turbomachine comporte des moyens de prélèvement contenant de l'air à pression atmosphérique, les moyens d'amenée du circuit de circulation d'air étant reliés à ces moyens de prélèvement.

Ainsi, l'air n'est plus prélevé au niveau du premier étage de compression. En effet, la présence du compresseur en aval de l'enceinte palier permet d'utiliser de l'air à pression atmosphérique pour être injecté dans l'enceinte palier. En effet, l'air à pression atmosphérique est aspiré dans l'enceinte palier grâce au compresseur. C'est avantageux car cela permet de ne pas pénaliser le rendement de la turbomachine.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une représentation schématique d'une enceinte palier de l'art antérieur ;
- La figure 2, une représentation schématique d'un circuit de circulation d'air selon un mode de réalisation de l'invention ;
- La figure 3, une vue de côté d'une turbomachine comportant un circuit de circulation d'air selon un mode de réalisation de l'invention ;
- La figure 4, une vue de face d'une turbomachine comportant un circuit de circulation d'air selon un mode de réalisation de l'invention ;
- La figure 5, une vue en perspective d'une boite d'entraînement d'accessoires fixées à un compresseur utilisé dans un circuit de circulation d'air selon un mode de réalisation de l'invention ;
- La figure 6, une vue en coupe d'un compresseur utilisé dans un circuit de circulation d'air selon un mode de réalisation de l'invention.

Pour plus de clarté, les éléments identiques ou similaires sont repérés par des signes de références identiques sur l'ensemble des figures.

### DESCRIPTION DETAILLEE D'AU MOINS UN MODE DE REALISATION

Un circuit de circulation d'air selon un mode de réalisation de l'invention est représenté sur la figure 2. Ce circuit de circulation d'air permet de faire circuler de l'air à travers une enceinte palier 1 semblable à celle décrite en référence à la figure 1.

Ce circuit de circulation d'air comporte des moyens d'amenée 4 agencés pour amener de l'air dans l'enceinte palier 1. Selon différents modes de réalisation, cet air peut être prélevé au niveau d'un des étages de compression de la turbomachine, ou alors il peut être prélevé dans une autre zone de la turbomachine. Le circuit de circulation d'air comporte également des moyens d'évacuation 6 agencés pour évacuer au moins une partie de l'air de l'enceinte palier 1. Comme du lubrifiant a été injecté dans l'enceinte palier par les moyens d'injection 12, l'air évacué par les moyens d'évacuation 6 est chargé d'un bouillard de lubrifiant. Les moyens d'évacuation 6 sont donc reliés à un système de déshuilage 13 permettant de séparer au moins partiellement l'air 14 du lubrifiant 15. Un tel système de déshuilage est par exemple décrit dans le document FR2952402.

Afin de diminuer l'impact de la perte de charge créée par la présence de ce système de déshuilage 13, un compresseur 16 est inséré entre les moyens d'évacuation 6 et le système de déshuilage 13. Le compresseur 16 est donc inséré entre l'enceinte palier 1 et le système de déshuilage 13.

Le compresseur 16 permet de donner de l'énergie à l'air de façon à lui permettre de transiter de l'enceinte palier 1 vers le système de déshuilage 13 malgré la perte de charge créée par le système de déshuilage 13. En d'autres termes, le compresseur 16 permet d'aspirer l'air contenu dans l'enceinte palier 1 de façon à le diriger vers le système de déshuilage 13. Ainsi, lorsque le compresseur 16 est en fonctionnement, la pression P2 de l'air en sortie du compresseur 16 est supérieure à la pression P1 de l'air en entrée du compresseur 16. Plus la différence entre P2 et P1 est importante, plus l'énergie communiquée par le compresseur à l'air qui le traverse est importante.

L'élévation de pression communiquée par le compresseur à l'air qui le traverse est de préférence choisie de façon à être supérieure ou égale à la perte de charge générée par le système de déshuilage. On peut ainsi neutraliser complètement la perte de charge créée par le système de déshuilage. Dans le cas où l'air est prélevé par les moyens d'amenée 4 au niveau d'au moins un des étages de compression de la turbomachine, la présence du compresseur permet donc d'injecter de l'air dans le système de déshuilage avec plus d'énergie, ce qui permet au système de déshuilage d'être plus efficace. Toutefois, la présence du compresseur 16 peut aussi permettre de prélever moins voir plus du tout l'air au niveau des étages de compression de la turbomachine de façon à augmenter son rendement. En effet, puisque le compresseur 16 permet de d'élever la pression de l'air qui transite dans le circuit de circulation d'air, l'air ne doit plus nécessairement être prélevé par les moyens d'amenée 4 au niveau des étages de compression de la turbomachine, mais il peut être prélevé au niveau d'une autre zone de la turbomachine, dans laquelle l'air est par exemple à la pression de sortie du diffuseur voir atmosphérique.

Par ailleurs, le compresseur 16 est relié à des moyens de transmission de puissance qui permettent de le faire fonctionner. Pour cela, le compresseur 16 comporte généralement un arbre rotatif 17 qui est apte à être entraîné en rotation par les moyens de transmission de puissance.

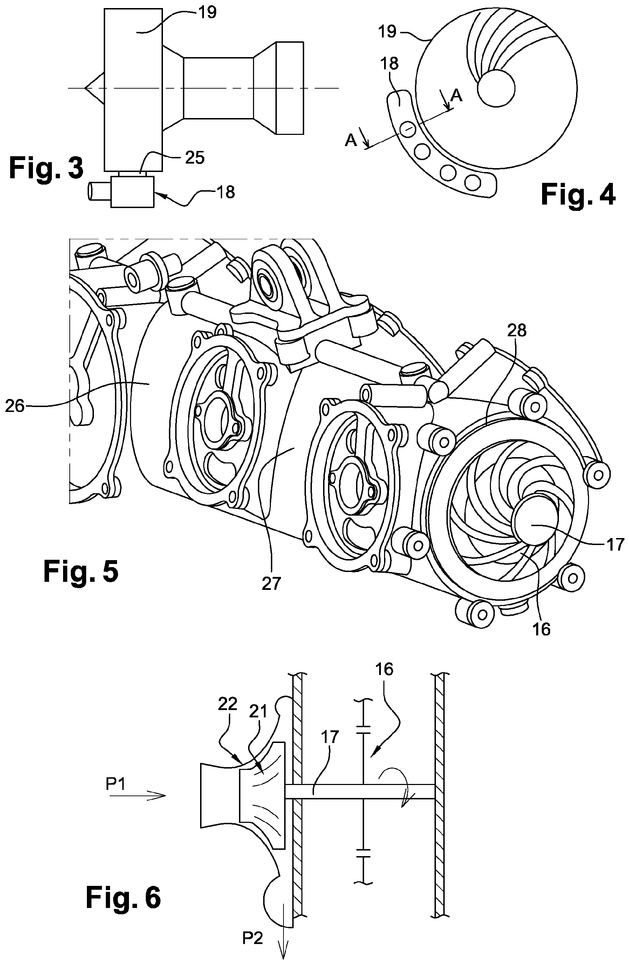

En référence aux figures 3 et 4, les moyens de transmission de puissance comportent de préférence une boite d'entrainement d'accessoires 18 qui est fixée sur un carter 19 de la turbomachine. La boite d'entraînement d'accessoires 18 permet d'entraîner en rotation l'arbre rotatif 17 du compresseur. Une telle boite d'entraînement d'accessoires 18, également appelée AGB ou « accessory gear box », est par exemple décrite dans les documents FR n°12 58196 ou FR n° 13 59910.

En référence aux figures 3 et 5, correspondant au cas où la boite d'entraînement d'accessoires est semblable à celle décrite dans le document FR n°13 59910, cette boite d'entraînement d'accessoires 18 comporte
- Un organe de prise de mouvement (non représenté) apte à engrener avec un arbre radial 25 de la turbomachine.
- Au moins une chaîne cinématique 26 apte à transmettre le mouvement de rotation de l'organe de prise de mouvement à l'arbre rotatif 17 du compresseur, la chaîne cinématique comportant un arbre central 27 relié à l'organe de prise de mouvement par un engrenage, l'arbre central étant agencé pour transmettre le mouvement de l'organe de prise de mouvement à l'arbre rotatif du compresseur. L'arbre central 27 de la boite d'entraînement d'accessoires comporte une extrémité distale 28. Le compresseur 16 est de préférence fixé sur cette extrémité distale 28 de façon à être situé dans le prolongement de l'arbre central 27 de la boite d'entraînement d'accessoires. Une telle configuration permet un gain de place. Selon un mode de réalisation préférentiel, le compresseur 16 est un compresseur centrifuge, car il est peu sensible à l'usure et il permet d'augmenter fortement la pression de l'air. Toutefois, on peut également envisager d'utiliser un compresseur volumétrique, par exemple à piston ou à palette.

Un compresseur 16 pouvant être utilisé dans le circuit de circulation d'air selon l'invention est par exemple représenté sur la figure 6. Un tel compresseur 16 comporte un arbre rotatif 17 qui peut être entraîné en rotation. Cet arbre rotatif 17 permet d'entraîner en rotation un rotor 21 à l'intérieur d'un stator 22. L'air provenant des moyens d'évacuation 6 est à la pression P1 et il entre dans l'espace situé entre le rotor 21 et le stator 22 de façon à être comprimé pour ressortir en direction du système de déshuilage à la pression P2 supérieure à P1.

Naturellement, l'invention n'est pas limitée aux modes de réalisation décrits en référence aux figures et des variantes pourraient être envisagées sans sortir du cadre de l'invention. On pourrait notamment utiliser d'autres types de compresseur que ceux décrits précédemment, ou encore entraîner le compresseur par d'autres moyens que ceux décrits précédemment.

## Revendications

1. Turbomachine comportant une enceinte palier (1) pour turbomachine, ladite enceinte palier (1) étant délimitée entre un rotor mobile en rotation autour d'un axe de référence et un stator comprenant un support de palier sur lequel est monté un palier s'appuyant sur ledit rotor, ladite enceinte comportant des moyens d'alimentation (2) en lubrifiant dudit palier et des moyens de récupération (5) du lubrifiant, ladite enceinte comportant un circuit de circulation d'air à travers ladite enceinte palier de turbomachine dans laquelle un lubrifiant peut être injecté, le circuit de circulation d'air comportant :
- des moyens d'amenée (4) agencés pour amener de l'air dans l'enceinte palier (1),
- des moyens d'évacuation (6) agencés pour évacuer au moins une partie du mélange air-lubrifiant contenu dans l'enceinte palier (1);
- un système de déshuilage (13) relié aux moyens d'évacuation (6), le système de déshuilage (13) étant apte à séparer le lubrifiant de l'air contenu dans le mélange air-lubrifiant provenant des moyens d'évacuation (6) ; le circuit de circulation d'air comportant en outre un compresseur (16) disposé entre les moyens d'évacuation (6) et le système de déshuilage (13), le compresseur (16) étant apte à augmenter la pression du mélange air-lubrifiant en entrée du système de déshuilage (13),
- des moyens de prélèvement contenant de l'air à pression atmosphérique, les moyens d'amenée du circuit de circulation d'air étant reliés à ces moyens de prélèvement.

2. Turbomachine selon la revendication précédente, dans lequel le système de déshuilage (13) génère une perte de charge, le compresseur (16) étant apte à compenser au moins une partie de la perte de charge générée par le système de déshuilage (16).

3. Turbomachine d'air selon l'une des revendications précédentes, dans lequel le compresseur (16) est un compresseur centrifuge.

4. Turbomachine selon l'une des revendications 1 ou 2, dans lequel le compresseur (16) est un compresseur volumétrique.

5. Turbomachine selon l'une des revendications précédentes, dans lequel le compresseur (16) comporte au moins un arbre rotatif (17), le circuit de circulation d'air comportant en outre des moyens de transmission de puissance aptes à entraîner en rotation l'arbre rotatif (17) du compresseur (16).

6. Turbomachine selon la revendication précédente, dans lequel les moyens de transmission de puissance comportent une boite d'entraînement d'accessoires (18) apte à transmettre le mouvement d'un arbre radial de la turbomachine à l'arbre rotatif du compresseur, la boite d'entrainement d'accessoires comportant :
- Un organe de prise de mouvement apte à engrener avec un arbre radial de la turbomachine;
- Au moins une chaîne cinématique apte à transmettre le mouvement de rotation de l'organe de prise de mouvement à l'arbre rotatif du compresseur, la chaîne cinématique comportant un arbre central (27) relié à l'organe de prise de mouvement par un engrenage, l'arbre central étant agencé pour transmettre le mouvement de l'organe de prise de mouvement à l'arbre rotatif (17) du compresseur (16).

7. Turbomachine selon la revendication précédente, dans lequel l'arbre central (27) comporte une extrémité distale (28), le compresseur étant fixé sur l'extrémité distale (28) de l'arbre central (27).

## Patentansprüche

1. Turbomaschine, umfassend eine Lagereinfassung (1) für eine Turbomaschine, wobei die genannte Lagereinfassung (1) zwischen einem um eine Referenzachse in Rotation beweglichen Rotor und einem Stator begrenzt ist, umfassend einen Lagerträger, auf dem ein Lager montiert ist, das sich auf den genannten Rotor stützt, wobei die genannte Einfassung Versorgungsmittel (2) per Schmieren des genannten Lagers und Auffangmittel (5) des Schmiermittels umfasst, wobei die genannte Einfassung einen Luftzirkulations-Kreislauf durch die genannte Lagereinfassung der Turbomaschine umfasst, in der ein Schmierstoff eingespritzt sein kann, wobei der Luftzirkulations-Kreislauf umfasst:
- Zuführmittel (4), die zum Zuführen der Luft in die Lagereinfassung (1) angeordnet sind;
- Austragsmittel (6), die zum Austragen wenigstens eines Teils der Mischung Luft / Schmierstoff in der Lagereinfassung (1) angeordnet sind;
- ein Entölungssystem (13), das mit den Austragsmitteln (6) verbunden ist, wobei das Entölungssystem (13) geeignet ist, den Schmierstoff von der Luft zu trennen, die in der Mischung Luft / Schmierstoff enthalten ist, die von den Austragsmitteln (6) stammt; wobei der Luftzirkulations-Kreislauf darüber hinaus einen Kompressor (16) umfasst, der zwischen den Austragsmitteln (6) und dem Entölungssystem (13) angeordnet ist, wobei der Kompressor (16) zum Erhöhen des Drucks der Mischung Luft / Schmierstoff am Eingang des Entölungssystems (13) geeignet ist;
- Entnahmemittel, die Luft unter atmosphärischem Druck enthalten, wobei die Zuführmittel des Luftzirkulations-Kreislaufs mit diesen Entnahmemitteln verbunden sind.

2. Turbomaschine gemäß dem voranstehenden Anspruch, bei dem das Entölungssystem (13) einen Ladungsverlust erzeugt, wobei der Kompressor (16) geeignet ist, wenigstens einen Teil des Ladungsverlustes, der durch das Entölungssystem (16) erzeugt ist, auszugleichen.

3. Luft-Turbomaschine gemäß irgendeinem der voranstehenden Ansprüche, bei der der Kompressor (16) ein Radialkompressor ist.

4. Turbomaschine gemäß einem der Ansprüche 1 oder 2, bei der der Kompressor (16) ein Verdrängungsverdichter ist.

5. Turbomaschine gemäß einem der voranstehenden Ansprüche, bei der der Kompressor (16) wenigstens eine Rotationswelle (17) umfasst, wobei der Luftzirkulations-Kreislauf darüber hinaus Übertragungsmittel der Leistung umfasst, die geeignet sind, die Rotationswelle (17) des Kompressors (16) in Rotation anzutreiben.

6. Turbomaschine gemäß dem voranstehenden Anspruch, bei dem die Übertragungsmittel der Leistung einen Antriebskasten von Zubehör (18) umfassen, der geeignet ist, die Bewegung einer radialen Welle der Turbomaschine auf die Rotationswelle des Kompressors zu übertragen, wobei der Antriebskasten des Zubehörs umfasst:
- ein Nebenantriebsorgan der Bewegung, das zum Eingreifen in eine radiale Welle der Turbomaschine geeignet ist;
- wenigstens eine kinematische Kette, die zum Übertragen der Rotationsbewegung des Nebenantriebsorgans der Bewegung auf die Rotationswelle des Kompressors geeignet ist, wobei die kinematische Kette eine zentrale Welle (27) umfasst, die mit dem Nebenantriebsorgan der Bewegung durch ein Getriebe verbunden ist, wobei die zentrale Welle angeordnet ist, um die Bewegung des Nebenantriebsorgans der Bewegung auf die Rotationswelle (17) des Kompressors (16) zu übertragen.

7. Turbomaschine gemäß dem voranstehenden Anspruch, bei der die zentrale Welle (27) ein distales Ende (28) umfasst, wobei der Kompressor an dem distalen Ende (28) der zentralen Welle (27) befestigt ist.

## Claims

1. A turbine engine comprising a bearing housing (1) for a turbine engine, said bearing enclosure (1) being delimited between a rotor rotatably movable about a reference axis and a stator comprising a bearing bracket on which a bearing laying against said rotor is mounted, said enclosure including means (2) for feeding lubricant to said bearing and means (5) for recovering lubricant, said enclosure including an air-flow circuit through said bearing enclosure of turbine engine in which a lubricant can be injected, the air-flow circuit including:
- supply means (4) arranged to supply air into the bearing enclosure (1),
- discharging means (6) arranged to discharge at least some of the air-lubricant mixture contained in the bearing enclosure (1);
- an oil-removal system (13) connected to the discharging means (6), the oil-removal system (13) being capable of separating the lubricant from the air contained in the air-lubricant mixture coming from the discharging means (6); the air-flow circuit further including a compressor (16) disposed between the discharging means (6) and the oil-removal system (13), the compressor (16) being capable of increasing the pressure of the air-lubricant mixture at the intake of the oil-removal system (13),
- drawing means containing air at atmospheric pressure, the drawing means of the air-flow circuit being connected to these drawing means.

2. The turbine engine according to the preceding claim, wherein the oil-removal system (13) generates a head loss, the compressor (16) being capable of compensating for at least some of the head loss generated by the oil-removal system (16).

3. The air turbine engine according to one of the preceding claims, wherein the compressor (16) is a centrifugal compressor.

4. The turbine engine according to one of claims 1 and 2, wherein the compressor (16) is a positive displacement compressor.

5. The turbine engine according to one of the preceding claims, wherein the compressor (16) includes at least one rotating shaft (17), the air-flow circuit further including power transmission means capable of rotatably driving the rotating shaft (17) of the compressor (16).

6. The turbine engine according to the preceding claim, wherein the power transmission means include an accessory gear box (18) capable of transmitting the movement of a radial shaft of the turbine engine to the rotating shaft of the compressor, the accessory gear box including:
- a power take-off member capable of meshing with a radial shaft of the turbine engine;
- at least one kinematic chain capable of transmitting the rotational movement of the power take-off member to the rotating shaft of the compressor, the kinematic chain including a central shaft (27) connected to the power take-off member through a gear, the central shaft being arranged to transmit the movement of the power take-off member to the rotating shaft (17) of the compressor (16).

7. The turbine engine according to the preceding claim, wherein the central shaft (27) includes a distal end (28), the compressor being attached to the distal end (28) of the central shaft (27).
